(19) **Europäisches Patentamt**
**European Patent Office**
**Office européen des brevets**

(11) **EP 4 492 092 A1**

(12) **EUROPEAN PATENT APPLICATION**

(43) Date of publication:
**15.01.2025 Bulletin 2025/03**

(51) International Patent Classification (IPC):
**G01S 13/90** (2006.01)

(21) Application number: **24188197.8**

(52) Cooperative Patent Classification (CPC):
**G01S 13/9058; G01S 13/9023**

(22) Date of filing: **12.07.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 DE 102023118442**

(71) Applicant: **Deutsches Zentrum für Luft- und Raumfahrt e.V.**
**53227 Bonn (DE)**

(72) Inventors:
- **Nogueira Peixoto, Maxwell**
  **81241 München (DE)**
- **Villano, Michelangelo**
  **82205 Gliching (DE)**
- **Krieger, Gerhard**
  **82131 Gauting (DE)**
- **Moreira, Alberto**
  **82140 Olching (DE)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD FOR GENERATING DIGITAL ELEVATION MODELS OF A TO-BE CONSIDERED REGION ON EARTH BY USING A SYSTEM OF MULTIPLE SYNTHETIC APERTURE RADAR (SAR) PLATFORMS**

(57) Disclosed is a method for generating a digital elevation model of a to-be-considered region on the earth or on another planetary body by using a system of multiple synthetic aperture radar (SAR) platforms, in a single pass, by comprising the following steps providing a system of several SAR platforms which are arranged with multiple along-track and cross-track baselines, wherein at least one of the SAR platforms repeatedly transmits pulses towards the to-be-considered region, i.e., in the slant range direction. The receiving SAR platforms receive the echo signals (raw data) and are provided with antennas, whose lengths in the along-track direction are smaller than the length required to have the 3 dB Doppler bandwidth of the received signal equal to the pulse repetition frequency, whereby the 3 dB Doppler bandwidth is defined as the width of the interval of Doppler frequencies for which the intensity of the response from a target on the ground is at least half of that of its maximum. Range compression on the raw data is performed to obtain range-compressed data. The range-compressed data of all receiving SAR platforms are jointly processed into a tomogram by a 2-D beamforming in the along-track and cross-track dimensions and the digital elevation model is estimated from the tomogram.

Raw data

↓

| Range compression |

↓

| Beamforming in azimuth and elevation |

↓

Tomogram

↓

| Multilooking |

↓

| Pixelwise height estimation by tomogram maximization |

↓

DEM

**Fig. 4**

**Description**

The invention relates to a synthetic aperture radar (SAR) generating a digital elevation model of a to-be-considered region on the earth or on another planetary body by using a system of multiple synthetic aperture radar (SAR) platforms, e.g., SAR satellites, in a single pass of the platforms over the to-be-considered region, comprising the following steps.

Field of the invention and prior art background

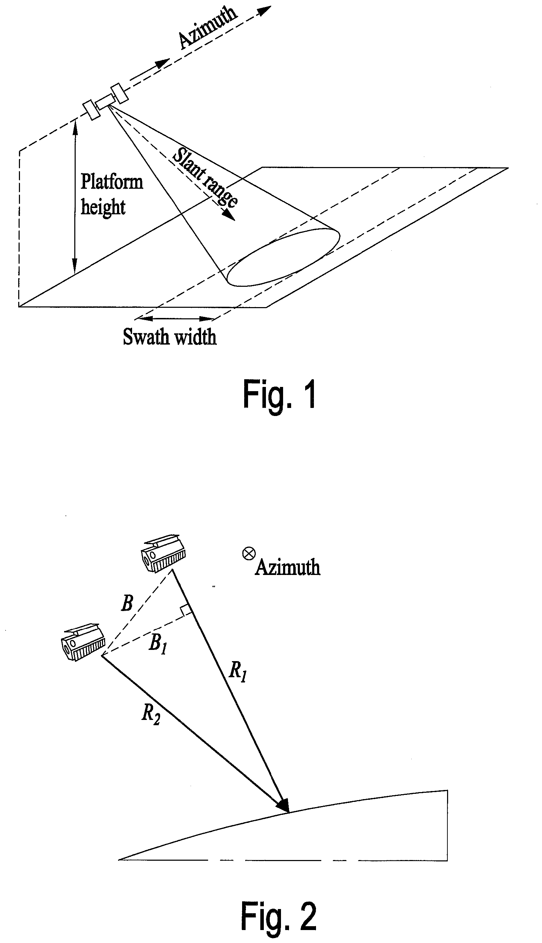

Synthetic aperture radar (SAR) is a class of active coherent high-resolution imaging radar with various applications in remote sensing. As depicted in Figure 1, a SAR operates on a moving platform in a side-looking geometry. The direction of movement is called the azimuth direction, and the radial distance from the platform is called the slant range. The radar images a limited slant range interval, which, as depicted in Figure 1, maps to a region on the ground (earth) in the form of a strip parallel to the azimuth direction called the swath by sending pulses of electromagnetic radiation in that direction at a frequency called the pulse repetition frequency (PRF) and receiving an echo for each transmitted pulse.

Therefore, the SAR raw data are sampled along azimuth at the PRF. However, only a portion of the Doppler spectrum (the azimuth spectrum) of the raw data is processed to form the SAR image. This portion is called the processed Doppler bandwidth. The sampling causes the aliasing effect, where Doppler frequency components of the signal outside the [-PRF/2, PRF/2] interval fold into the processed Doppler bandwidth, superimposing to and corrupting the main signal. These are called azimuth ambiguities. The Doppler spectrum of the SAR raw data is modulated by the antenna pattern along azimuth, and the length of the interval of Doppler frequencies where the power is not lower than 3 dB below of that of the peak is called the 3 dB Doppler bandwidth. The azimuth sampling frequency - which, in this case, is the PRF - must be high enough (and usually higher than the Doppler bandwidth) to meet azimuth-ambiguity-to-signal ratio requirements. SAR imaging can also be achieved, if the pulses are not sent at a constant pulse repetition frequency, but at nonuniform pulse repetition intervals.

SAR images can also be formed by combining the data from a train of *N* SAR satellites following the same track. Either a single satellite transmits pulses, or the pulse transmission is alternated between the satellites, or multiple satellites simultaneously transmit pulses characterized by mutually orthogonal waveforms. In all cases, the raw data from the N receivers can be combined to produce raw data sampled with an equivalent PRF N times larger than the PRF of the single satellite. Therefore, with N satellites in a train formation, SAR images can be formed with a PRF up to around N times lower than the system's Doppler bandwidth and still meet azimuth-ambiguity-to-signal ratio requirements. This allows imaging the same swath width using multiple antennas with smaller apertures.

Across-track SAR interferometry is a technique where two SAR images of the same region are taken from different positions as depicted in Figure 2 and combined to generate a digital elevation model (DEM) of the region. The separation between the tracks is called the across-track baseline B, and its projection orthogonal B1 to both the slant range and azimuth directions is called the orthogonal baseline.

The two images can be obtained simultaneously (i.e., in a single pass of two satellites), which is called a bistatic configuration, or at different times, which is called a repeat-pass configuration. Many SAR systems can perform across-track interferometry in the repeat-pass configuration, as it requires only a single satellite, but this configuration has the issue of temporal decorrelation, i.e., the quality of the resulting DEM is impaired due to the changes of the scene (or of the atmospheric properties) between the two acquisitions.

The two images are combined pixelwise to form an interferogram according to

$$v_{12} = u_1 u_2^*, \qquad\qquad (1)$$

where $v_{12}$ are the pixels of the interferogram, $u_1$ and $u_2$ are the pixels of each of the two images, and $\cdot^*$ is the complex conjugate operation. The phase of the interferogram is then the phase difference between the two images. Because the tracks are different, the two bidimensional images are projections of the scene into different coordinate systems, so, prior to forming the interferogram, a process called coregistration is performed where transformations are applied to align both images. After the interferogram is formed, a process called multilooking is performed by averaging neighboring interferogram pixels to reduce the uncertainty in the phase at the cost of a degraded resolution of the DEM product.

The phase difference encoded in the interferogram is proportional to the height of the terrain according to

$$d\phi = \frac{2\pi}{h_{2\pi}} dh, \quad h_{2\pi} = \frac{n\lambda R \sin(\theta_i)}{B_\perp}, \qquad\qquad (2)$$

where $h_{2\pi}$, called the height of ambiguity, is the height difference that corresponds to a $2\pi$ phase difference, $\theta_i$ is the incidence angle, $\lambda$ is the carrier's wavelength, R is the slant range, $B_\perp$ is the orthogonal baseline, and $n$ is 2 if the interferogram is formed from a bistatic configuration and 1 if from a repeat-pass configuration. This proportionality holds for the absolute interferometric phase, but phases are cyclic, so the observed phases are the result of wrapping the absolute phase into, for example, the $[-\pi,\pi[$ interval. Phase unwrapping is the process of reconstructing the absolute phases from the wrapped phases. After performing the phase unwrapping, the relation in (2) is then used to convert the absolute phases into a digital elevation model of the imaged region.

The phase unwrapping process can yield incorrect values for the absolute phase. These are called phase unwrapping errors and they affect the resulting DEM in the form of height offsets that are multiples of the height of ambiguity. For a fixed level of phase uncertainty, the smaller the height of ambiguity, the higher the precision of the resulting DEM, but the more likely it is for phase unwrapping errors to occur.

To resolve phase unwrapping errors, additional bistatic acquisitions over the same scene can be performed, but with different baselines, and, therefore, different heights of ambiguity [1]. The resulting interferograms can be then processed according to a multi-baseline phase unwrapping algorithm, e.g., the one presented in [1], to generate DEMs free of unwrapping errors.

The generation of DEMs requires unambiguous, high-SNR SAR images, that can be acquired using large antenna apertures. These requirements lead to large and expensive satellites. High-accuracy DEMs generated from a single pass of a bistatic SAR interferometer are susceptible to phase unwrapping errors. Bistatic SAR interferometers are then not suited for frequent monitoring of fast-changing scenes or the generation of time series of DEMs, as resolving the phase unwrapping errors requires additional passes of the satellites and also orbit maneuvers between the passes to change the baseline. Single-pass DEM generation could be achieved with a multistatic system consisting of at least three SAR satellites, but such a system would have a very high cost due to the number of satellites and their size.

DEMs can also be generated with multiple trains of satellites with small apertures, but in this case a very large number of satellites is required.

An object of the present invention is to develop a method for generating digital elevation models of a to-be considered region on the earth by using a facilitated system of multiple synthetic aperture radar (SAR) platforms.

For solving the above-mentioned object, the invention proposes a method for generating a digital elevation model of a to-be-considered region on the earth or on another planetary body by using a system of multiple synthetic aperture radar (SAR) platforms, e.g., SAR satellites, in a single pass of the platforms over the to-be-considered region, comprising the following steps

- providing a system of several SAR platforms which are arranged with multiple along-track and cross-track baselines,
- wherein at least one of the SAR platforms repeatedly transmits pulses towards the to-be-considered region, i.e., in the slant range direction defined by the position of the platforms and the position of the to-be considered region, with a certain pulse repetition frequency and,

  - wherein at least some of the SAR platforms, i.e., the receiving SAR platforms, receive the echo signals, denoted as raw data, reflected from the to-be-considered region, and are provided with antennas, whose lengths in the along-track direction are smaller than the length required to have the 3 dB Doppler bandwidth of the received signal equal to the pulse repetition frequency or the average pulse frequency in case of non-uniform pulse repetition intervals, whereby the 3 dB Doppler bandwidth is defined as the width of the interval of Doppler frequencies for which the intensity of the response from a target on the ground is at least half of that of its maximum,
  - performing range compression on the raw data received by each receiving SAR platform to obtain range-compressed data,

- jointly processing the range-compressed data of all receiving SAR platforms into a tomogram by a 2-D beamforming in the along-track and cross-track dimensions and
- estimating the digital elevation model from the tomogram.

In one aspect of the present invention, the tomogram is processed for suppression of radar ambiguities along the along-track and cross-track dimensions by exploiting spectral filters.

In a further aspect of the processing the tomogram, the estimation of the digital elevation model from the tomogram comprises performing multilooking of the tomogram.

According to a further aspect of the present invention, the step of multilooking of the tomogram comprises moving average of the intensity as absolute value squared across the slant range and along-track directions, and, for each slant range and along-track position, selecting the height that corresponds to the maximum of the multilooked tomogram.

As mentioned earlier, the SAR platforms are provided with antennas whose lengths in the along-track direction are smaller than the lengths required to have the 3 dB Doppler bandwidth of the received signal equal to the pulse repetition frequency. In certain aspects of the present invention, the antenna lengths of the SAR platforms in the along-track direction, by at least a factor of two or three or four or five or more, are smaller than the length required to have the 3 dB Doppler bandwidth of the received signal.

In a further alternative embodiment of the present invention, the repeatedly transmission of the pulses alternates among some of the SAR platforms.

As an alternative, the step of repeatedly transmitting pulses comprises that multiple SAR platforms transmit pulses comprising waveforms orthogonal to each other.

According to still a further aspect of the present invention, only a subset of the SAR platforms repeatedly transmits pulses with the receiving SAR platforms being provided without pulse transmission capability and for receiving echo signals only.

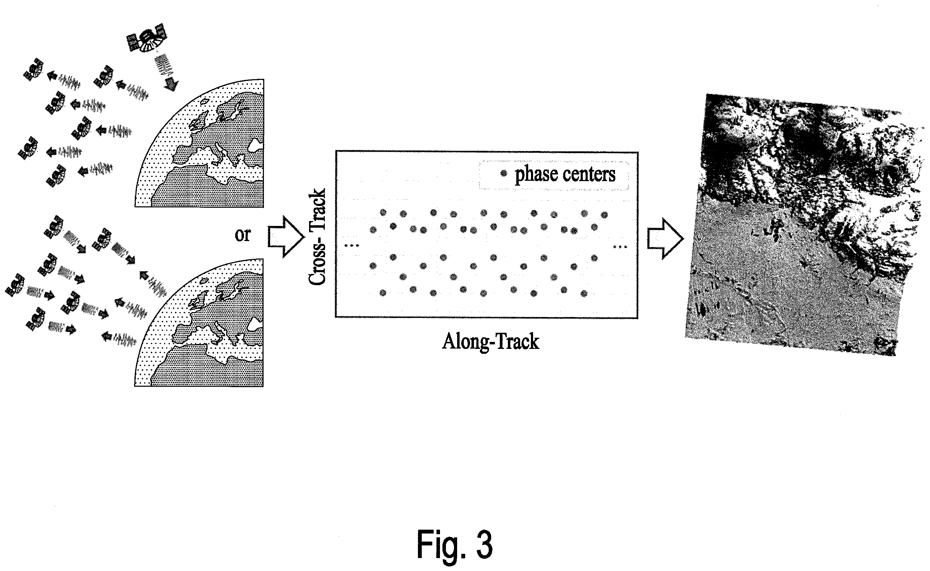

This invention proposes a method and an apparatus for the generation of DEM using multiple SAR systems with small antenna apertures flying in formation arranged with multiple across- and along-track baselines and a dedicated processing (cf. Figure 3). Furthermore, the system operates with a PRF much lower than the Doppler bandwidth. The pulse transmissions can be handled by a dedicated satellite and all other satellites receive the echoes, or the pulse transmissions can be alternated between the satellites. Another alternative is that multiple satellites simultaneously transmit pulses characterized by waveforms mutually orthogonal to each other. If only a subset of satellites transmits pulses, the other satellites can be made without transmit capability, significantly reducing their cost.

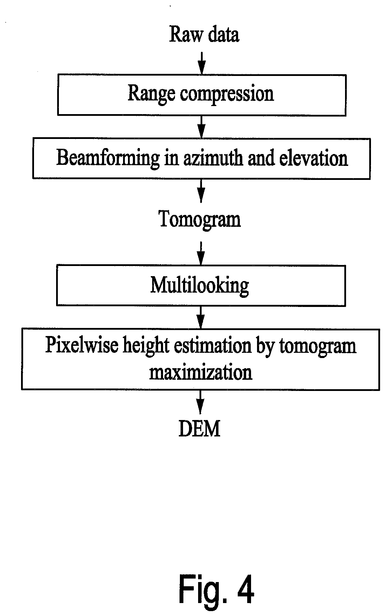

The block diagram according to Figure 4 shows the main processing steps for generating the DEM model based on the raw data provided by the small satellites of the cluster of small satellites.

According to one aspect of the present invention, the first step in the processing for DEM generation is to perform range compression on the raw data from each satellite, i.e., perform matched filtering along slant range matched to the transmitted pulses. The range-compressed data of all satellites are then processed through beamforming to form a tomogram, which is a 3-dimensional SAR image, with the dimensions being the slant range, the azimuth and the elevation. The value of the tomogram at a certain position is the result of a beamforming operation that uses the range-compressed data from all satellites to focus a beam towards that position. The coefficients for this beamforming can be separated as the product of two components, one responsible for focusing the data along azimuth and one responsible for focusing and steering the beam in elevation. One possibility to compute the components responsible for the focusing along azimuth is to follow the processing with multichannel reconstruction presented in [2]. One possibility for computing the components responsible for steering the beam in elevation is to set them to compensate the topographic phase expected from a target at the height in question. The resulting tomogram can also be post-processed for the suppression of azimuth ambiguities, for example by exploiting their unique signature to differentiate them from the desired signal and remove them. The final DEM is then extracted from the tomogram. One method for such is to first multilook the tomogram across slant range and azimuth by averaging of the squared absolute value of the data across different "looks" - the averaging can be performed across a small moving window (e.g., $5 \times 5$ pixels) in slant range and azimuth (each pixel is considered a different "look"), or be performed by splitting the range and azimuth spectra of the tomogram into a number of sub-bands, forming a tomogram from each sub-band and then averaging across these tomograms (each tomogram is a different "look") - and then, for each slant range and azimuth position, performing a height estimation from the profile of the multilooked tomogram across elevation.

The multiple across-tracks baselines allow DEM generation with high accuracy and robustness to phase unwrapping errors. The multiple along-track baselines allow the proper DEM generation with a PRF much lower than the Doppler bandwidth, which in turn enables the use of smaller antennas and allows the reduction of the size and cost of the satellites.

The advantages of the proposed system with respect to traditional bistatic SAR interferometry are that

1) the proposed system allows for the generation of DEMs with the same performance (in terms of resolution, accuracy and swath area) as conventional SAR interferometric systems but at a much lower cost, due to the use of small satellites with small antenna apertures;
2) the proposed system does not suffer from phase unwrapping errors, due to the presence of multiple across-track baselines;
3) the proposed system has more flexibility as the cluster of smallsats can be rearranged in diverse ways and be used for different applications, such as along-track SAR interferometry and potentially single-pass SAR tomography;
4) the proposed system is more robust to hardware failure, as the system would be able to generate the products even after the loss of one or a few receiver satellites, albeit with some reduction in quality;
5) in the proposed system, it can be financially feasible to replace lost satellites, due to their lower individual cost and size. Compared to traditional bistatic SAR interferometry with an additional flight pass to resolve phase unwrapping errors, the proposed system has the advantage of requiring less time to generate a DEM for any given area, and, because only a single pass of the satellite cluster is required, it does not exclude applications related to the observation of fast-changing topography, as is the case when using two flight passes with a large time separation between them; 6) SAR imaging can be achieved both if the pulses are transmitted at a constant pulse repetition frequency or at nonuniform pulse repetition intervals (average pulse repetition frequency).

In the following the invention will be described in further detail referring to the drawing in which

Figure 1 shows the basic geometry of a SAR system,

Figure 2 shows the basic geometry of an across-track-SAR interferometric system,

Figure 3 shows schematic of the SAR-interferometric system according to the invention for DEM generation, wherein a single transmitter (top left) or multiple transmitters (bottom left) can be used and wherein the raw data from the cluster form an array of phase centers, one for each receiver transmitter pair at each pulse, distributed in along-track and across-track (center) and is processed to directly generate a DEM (right),

Figure 4 shows a block diagram of the technique for processing the date from the cluster of specifically small satellites to generate a DEM,

Figure 5 shows an exemplary arrangement of 8 small satellite receivers for the distributed SAR interferometric system according to the invention, and

Figure 6 shows in (a) Terrain topography and (b) multilooked tomogram at a specific slant range formed from the data of a simulated acquisition performed by the distributed SAR interferometric system under consideration wherein the black line in (b) shows the DEM generated by maximization of the tomogram.

An example of the present invention will be described herein below in more detail referring to both some of the figures mentioned already above as well as further figures of the drawing.

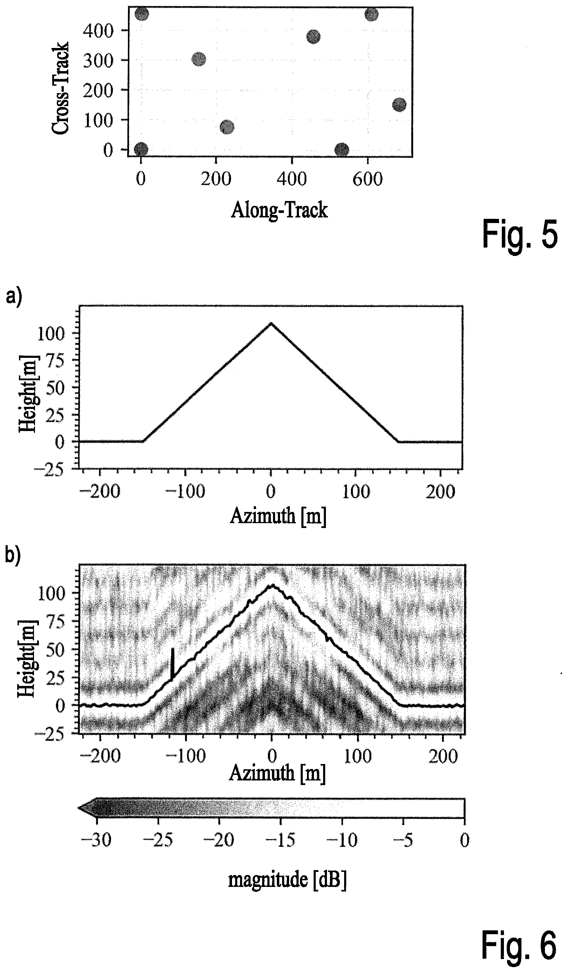

The following considers a cluster of eight small satellites (smallsats) along with a dedicated transmitter. The parameters of the system are listed in Table 1. The arrangement of the 8 receivers is shown in Figure 5 and Table 2.

**Table 1**

| Parameters of the distributed SAR interferometric system according to an example of the present invention. | |
|---|---|
| Carrier frequency | 9.65 GHz |
| Orbit height | 515 km |
| Incidence angle | 36° |
| Receiver antenna | Planar, 0.5 m × 0.7 m (length × height) |
| Transmitter antenna | Planar, 2 m × 0.7 m (length × height) |
| 3 dB Doppler bandwidth | 8634 Hz |
| Processed Doppler bandwidth | 8634 Hz |
| PRF | 3100 Hz |

**Table 2**

| Along- and across-track position of the 8 smallsat receivers of the distributed SAR interferometric system according to this embodiment of the present invention. | | | | | | | | |
|---|---|---|---|---|---|---|---|---|
| Receiv er ID | 1 | 2 | 3 | 4 | 5 | 6 | 7 | 8 |
| Along-track positio n [m] | 0. 0 | 228 . 0 | 531. 7 | 683. 5 | 0.3 | 152. 9 | 455. 8 | 608. 4 |
| Across-track positio n [m] | 0. 0 | 75.9 | 0.0 | 151. 7 | 455. 2 | 303. 5 | 379. 3 | 455. 2 |

The raw data acquired by the cluster over a homogeneous scene with a flat topography including a pyramid at the center were simulated. Noise was included in the raw data with a signal-to-noise ratio of 6 dB. The data were then processed into a tomogram by a 2D beamforming including, in azimuth, a combination of multi-channel reconstruction for recovering a bandwidth equal to 3 times the PRF, azimuth compression and low-pass filtering to the processed Doppler bandwidth, and, in elevation, Fourier beamforming. The tomogram was then multilooked with a $5 \times 5$ moving window. Figure 6 shows in (a) the terrain topography of the to-be considered region and in (b) the multilooked tomogram along with the terrain topography (dashed black line) and the DEM generated by maximization of the tomographic response (white line). The generated DEM shows a good agreement with the underlying topography and the standard deviation of the height error was 0.67 m. Note, however, that there is a spike in the DEM at around -120 m in azimuth. Spikes such as this one are the result of an incorrect height ambiguity band being selected by the tomogram maximization. These errors occur occasionally but can be corrected by several means, e.g. by exploiting the high spatial correlation of typical terrain to reject strong localized jumps in height or by increasing the number of small satellites. The aforementioned height error standard deviation was evaluated excluding these spikes.

In the following, the present invention will once again be described in conjunction with an embodiment.

As already mentioned above, synthetic aperture radar (SAR) interferometry is an essential remote sensing technique with a wide range of applications. Studying and monitoring dynamic processes on the Earth's surface requires digital elevation models (DEMs) at short time intervals, making distributed and multi-static SAR systems a very promising solution to this need. The present invention introduces a concept for distributed SAR interferometry using a cluster of smallsats with small antenna apertures operating with a pulse repetition frequency much smaller than the Doppler bandwidth and capable of single-pass DEM generation with high accuracy and robustness to phase unwrapping errors. The novelty of the proposed method is that the DEM is extracted from a tomogram formed using all available data without requiring as an intermediate step the formation of SAR images. This allows reducing the number of required satellites and obtaining increased baseline diversity at the same time. A cluster of smallsats is a very attractive low-cost solution for the implementation of future interferometric SAR missions.

Studying and monitoring dynamic phenomena on the Earth, such as melting ice, through satellite remote sensing demands continuous data time series and small revisit times. Synthetic aperture radar (SAR) interferometry is a powerful remote sensing technique capable of supplying data with high accuracy and resolution for many such applications, but, while nowadays frequent revisit is achieved for SAR imaging through satellite constellations, it remains missing for single-pass interferometric products, such as high-quality digital elevation models (DEMs). State-of-the-art SAR interferometric systems generally require multiple passes of the satellites over the same area to generate such products, limiting the sampling frequency of any produced time series. Even TanDEM-X, a formation-flying mission capable of generating interferograms in a single pass, requires additional passes with different baselines - the spatial separation between the satellites - to produce DEMs robust to unwrapping errors and to resolve layover, for example, in mountainous areas [1]. Furthermore, multi-pass systems have to deal with the fact that the imaged scene and the behavior of the atmosphere changes between different passes of the satellites. This can affect the data quality (e.g., strong rain occurs between two passes, changing the arrangement of the soil and vegetation, and so causing decorrelation between the images), introduce additional complexity (e.g., the different ionospheric delays between the passes may have to be estimated and compensated), and even prevent the generation of an unambiguous product (e.g., snow fall events that occur between two passes change the topography and may prevent the passes from being able to be used in conjunction for resolving phase unwrapping errors).

In single-baseline across-track SAR interferometry, there is a trade-off between accuracy and robustness to unwrapping errors, the former and the latter achieved with larger and smaller baselines, respectively If additional baselines are available, multiple interferograms can be formed and combined to produce a final DEM with both high accuracy and robustness. Furthermore, with multiple baselines, SAR tomography can potentially be used to resolve layover in the DEMs and also enable a wide range of applications, such as measurements of biomass from the vertical structure of forests. A formation with three or more satellites separated in the across-track direction would then be capable of robustly producing highly accurate DEMs in a single pass, avoiding the drawbacks and limitations of generating a product from data acquired at different times, and enabling the generation of time series with frequent revisit, supporting applications such as glacier or permafrost monitoring.

Instead of a formation with large satellites, the present invention proposes the use of a cluster of a larger number of smallsats with small antenna apertures, such that the data from each individual satellite are not sufficient to form an unambiguous SAR image, but the data from the whole cluster can be combined to produce an unambiguous and highly accurate DEM. A cluster of smallsats can be a more cost-effective and agile solution than a few large satellites and has the usual advantage of distributed systems: if some of the satellites in the cluster fail, the cluster can still generate products, albeit with some reduction in quality, and it would be financially feasible to replace the failed satellites as their individual cost is low compared to that of the whole mission. Furthermore, a cluster of many smallsats can have the flexibility to rearrange itself into different formations for other applications, such as along-track interferometry or tomography.

Distributed SAR imaging can be performed with satellites flying a train formation [3]. SAR interferometry for robust DEM generation could then be achieved with three or more trains of satellites, each producing a SAR image, and the usual interferometric SAR processing using these images. However, if the goal is to produce a DEM, one should consider that the latter is characterized by a much lower information content with respect to the SAR images used to form it. The local spatial correlation of typical topography is in fact much larger than that of a SAR image, where the spatial correlation is low due to speckle. This discrepancy provides a hint that three or more full trains of smallsats produce data in excess of what is required for robust DEM generation. This observation was first exploited in [4] which proposes a CubeSat add-on to a bistatic SAR interferometer that provides an additional noisy SAR image with strong azimuth ambiguities which, despite its low quality, can be used to resolve unwrapping errors in the DEM produced by the system. Thus, the present invention proposes that the data from the entire cluster of smallsats be processed as a whole to directly generate a robust DEM from undersampled SAR data, without the intermediate step of generating high-quality SAR images. In this way, comparable DEM quality could be achieved with fewer smallsats, and the cluster is not required to be arranged in trains, so more across-track baselines can be present.

TOMOGRAM-BASED DEM GENERATION

The proposed system concept is a cluster of smallsats with small antenna apertures with the goal of generating robust and highly accurate DEMs. All or some of the satellites in the cluster can have pulse transmission capabilities and alternate the pulse transmission between themselves or maybe all transmitted simultaneously. Another option is to have a dedicated transmitter satellite - which can be an existing satellite opportunistically followed by the cluster - allowing the other satellites to be receive-only -. As a consequence of the small antenna apertures, the proposed system observes a wide Doppler bandwidth much higher than the pulse repetition frequency (PRF). Similarly to the train formation used for SAR imaging, the proposed cluster must contain along-track baselines enabling the reconstruction of this wide Doppler bandwidth, but, to allow robust DEM generation, it must also contain a mix of across-track baselines. Preference should be given to large baselines, as they contribute to the height accuracy, but a sufficient number of small and medium baselines should be included to provide robustness to the final DEM. As depicted in Fig. 3, the raw data from the cluster (two alternatives shown on the left side of Fig. 3) then form a sparse array of phase centers distributed in along- and across-track (see in the middle of Fig. 3) and are processed to directly generate a DEM (see in Fig. 3 right side), without the intermediate step of SAR image formation.

As shown in the block diagram in Fig. 4, a DEM can be generated from the data of the cluster of smallsats through tomographic response maximization, i.e., a tomogram can be formed from the range-compressed data of the whole cluster, multilooked, and, at each pixel in range and azimuth, the DEM height is selected as the height whose value in the multilooked tomogram is strongest. The tomogram can be formed from the array of phase centers provided by the cluster through beamforming in azimuth, including the azimuth compression and the reconstruction of the Doppler bandwidth wider than the PRF exploiting the along-track baselines, and in elevation exploiting the cross-track baselines. Furthermore, multilooking the tomogram consists in averaging the squared magnitude of the looks, which, as in conventional SAR interferometry, can be taken with a moving window in range and azimuth or by separating the data into frequency bands in range and azimuth.

This method of DEM generation is a generalization of conventional SAR interferometry, and, in fact, in the single-baseline case the same DEM is equivalently obtained by maximizing the tomogram formed using Fourier beamforming in elevation with the two available images. More generally, in the multi-baseline case, the tomographic response maximization with Fourier beamforming in elevation is the maximum-likelihood estimator of the height under the assumption of equal interferometric coherences in all baselines. This result is proven by observing that, in that case, the log-likelihood function

$$\ln \mathcal{L}(h | \boldsymbol{u}_1, \dots, \boldsymbol{u}_L) = C + \sum_{l=1}^{L} -\boldsymbol{u}_l^H e^{jFh} \Gamma^{-1} e^{-jFh} \boldsymbol{u}_l \tag{21}$$

is equal to the multilooked tomogram

$$q(h) = \frac{1}{L} \sum_{l=1}^{L} |q_l(h)|^2 = \frac{1}{L} \sum_{l=1}^{L} \boldsymbol{u}_l^H e^{jFh} \mathbf{1}\mathbf{1}^T e^{-jFh} \boldsymbol{u}_l \tag{3}$$
$$\because q_l(h) = \mathbf{1}^T e^{-jFh} \boldsymbol{u}_l$$

but for a constant and a linear factor, where $h$ is the height, $\boldsymbol{u}_l$ are the vectors of values of the focused data at the range and azimuth pixel in question corresponding to each satellite, $l$ is the index of the look, $L$ is the total number of looks, $\cdot^T$ denotes the transpose, $\cdot^H$ denotes the transpose complex conjugate, $\Gamma$ is the coherence matrix, $e^{jFh}$ is a diagonal matrix encoding the Fourier beamforming in elevation, $C$ is a constant dependent on the coherence matrix, $\mathbf{1}$ is a vector whose entries are

all 1, and $q_l(h)$ are the different looks of the tomogram.

In the presence of volume scattering, the proposed method of DEM generation will, much like in conventional SAR interferometry, yield heights related to the phase center within the volume, albeit with some accuracy degradation. The multiple baselines in the proposed system, however, can enable tomographic applications such as estimation of ground and canopy heights in a forest. Interferograms formed from the data of any pair of smallsats in the cluster are severely corrupted by azimuth ambiguities because the system operates with a PRF much lower than the Doppler bandwidth. The proposed processing technique is a good match for this scenario because the tomogram is formed through the coherent combination of the data from the entire cluster allowing the suppression of azimuth ambiguities by exploiting the available along-track baselines.

SAMPLE IMPLEMENTATION

This section presents an example implementation of the proposed concept, and a simulation of the DEM generation through the tomographic response maximization method. Consider a cluster of 8 smallsat SAR receivers arranged as shown in Fig. 5 and a dedicated transmitter satellite, all in helix orbits and operating at the same altitude and frequency as TanDEM-X. The arrangement of the satellites evolves across the orbit, but is approximately constant within the duration of an acquisition. The smallsat receivers have rectangular antennas of length of 0.5 m, much smaller than the 4.8 m of the TanDEM-X antenna, and the dedicated transmitter satellite has a rectangular antenna of length of 2 m. With these parameters, the system observes a 3 dB Doppler bandwidth of 8634 Hz, much higher than its PRF of 3100 Hz.

CONCLUSION

The present invention proposes the concept of a distributed interferometric SAR system based on a cluster of smallsats with reduced antenna size that is capable of robust and accurate DEM generation in a single pass of the satellites, avoiding the drawbacks of using multiple observations separated in time. A new method for DEM generation is presented that does not require the formation of SAR images, and so does not constrain the cluster to train formations, allowing a smaller number of satellites to be used than otherwise possible.

This concept is a promising solution for future Earth observation missions that require single-pass generation of high-quality DEMs and could also be of interest for missions for planetary exploration.

Digital Elevation Models (DEM) are used for a number of geospatial applications, including infrastructure planning and management, land-use planning, modeling water flow or mass movements for risk estimation of landslides, ortho-rectified map generation, geo-coding of aerial photography or satellite imagery, 3D visualization, surface coal mine monitoring, etc.

**List of references**

[1] M. Lachaise, T. Fritz and R. Bamler, "The Dual-Baseline Phase Unwrapping Correction Framework for the TanDEM-X Mission Part 1: Theoretical Description and Algorithms," in IEEE Trans. on Geosci. and Rem. Sens., vol. 56, no. 2, pp. 780-798, Feb. 2018.

[2] G. Krieger, N. Gebert and A. Moreira, "Unambiguous SAR Signal Reconstruction from Nonuniform Displaced Phase Center Sampling," in IEEE Geosci. and Rem. Sens. Lett., vol. 1, no. 4, pp. 260-264, Oct. 2004.

[3] EP 2 018 577 B1

[4] M. N. Peixoto, M. Villano, G. Krieger, A. Moreira and C. Waldschmidt, "On the Exploitation of CubeSats for Highly Accurate and Robust Single-Pass SAR Interferometry," in review.

**Claims**

1. Method for generating a digital elevation model of a to-be-considered region on the earth or on another planetary body by using a system of multiple synthetic aperture radar (SAR) platforms, e.g., SAR satellites, in a single pass of the platforms over the to-be-considered region, comprising the following steps

   - providing a system of several SAR platforms which are arranged with multiple along-track and cross-track baselines,

- wherein at least one of the SAR platforms repeatedly transmits pulses towards the to-be-considered region, i.e., in the slant range direction defined by the position of the platforms and the position of the to-be considered region, with a certain pulse repetition frequency and,

- wherein at least some of the SAR platforms, i.e., the receiving SAR platforms, receive the echo signals, denoted as raw data, reflected from the to-be-considered region, and are provided with antennas, whose lengths in the along-track direction are smaller than the length required to have the 3 dB Doppler bandwidth of the received signal equal to the pulse repetition frequency or the average pulse frequency in case of non-uniform pulse repetition intervals, whereby the 3 dB Doppler bandwidth is defined as the width of the interval of Doppler frequencies for which the intensity of the response from a target on the ground is at least half of that of its maximum,

- performing range compression on the raw data received by each receiving SAR platform to obtain range-compressed data,

- jointly processing the range-compressed data of all receiving SAR platforms into a tomogram by a 2-D beamforming in the along-track and cross-track dimensions and

- estimating the digital elevation model from the tomogram.

2. Method according to claim 1, **characterized by** processing the tomogram for suppression of radar ambiguities along the along-track and cross-track dimensions by exploiting spectral filters.

3. Method according to claim 2, **characterized in that** the step of estimating the digital elevation model from the tomogram comprises performing multilooking of the tomogram.

4. Method according to claim 3, **characterized in that** the step of multilooking of the tomogram comprises moving average of the intensity as absolute value squared across the slant range and along-track directions, and, for each slant range and along-track position, selecting the height that corresponds to the maximum of the multilooked tomogram.

5. Method according to anyone of claims 1 to 4, **characterized in that** the antenna lengths in the along-track direction, by at least a factor of two or three or four or five or more, are smaller than the length required to have the 3 dB Doppler bandwidth of the received signal.

6. Method according to anyone of claims 1 to 5, **characterized in that** the repeatedly transmission of the pulses alternates among some of the SAR platforms.

7. Method according to anyone of claims 1 to 5, **characterized in that** the step of repeatedly transmitting pulses comprises that multiple SAR platforms transmit pulses comprising waveforms orthogonal to each other.

8. Method according to anyone of claims 1 to 7, **characterized in that** only a subset of the SAR platforms repeatedly transmits pulses with the receiving SAR platforms being provided without pulse transmission capability and for receiving echo signals only.

Fig. 1

Fig. 2

Fig. 3

Raw data

↓

| Range compression |
|---|

↓

| Beamforming in azimuth and elevation |
|---|

↓

Tomogram

↓

| Multilooking |
|---|

↓

| Pixelwise height estimation by tomogram maximization |
|---|

↓

DEM

# Fig. 4

**Fig. 5**

**Fig. 6**

Europäisches
Patentamt
European
Patent Office
Office européen
des brevets

# EUROPEAN SEARCH REPORT

**Application Number**

EP 24 18 8197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GIUDICI DAVIDE ET AL: "Compact and Free-Floating Satellite MIMO SAR Formations", IEEE TRANSACTIONS ON GEOSCIENCE AND REMOTE SENSING, IEEE, USA, vol. 60, 12 March 2021 (2021-03-12), pages 1-12, XP011892160, ISSN: 0196-2892, DOI: 10.1109/TGRS.2021.3062973 [retrieved on 2021-12-07] * the whole document * | 1-8 | INV. G01S13/90 |
| A | SAKAR NIDA ET AL: "Sampling Analysis and Processing Approach for Distributed SAR Constellations With Along-Track Baselines", IEEE TRANSACTIONS ON GEOSCIENCE AND REMOTE SENSING, IEEE, USA, vol. 60, 21 March 2022 (2022-03-21), pages 1-12, XP011905676, ISSN: 0196-2892, DOI: 10.1109/TGRS.2022.3160874 [retrieved on 2022-03-21] * the whole document * | 1-8 | TECHNICAL FIELDS SEARCHED (IPC) G01S |
| A | DI MARTINO GERARDO ET AL: "Formation-Flying SAR Receivers in Far-From-Transmitter Geometry: Signal Model and Processing Scheme", 2021 IEEE INTERNATIONAL GEOSCIENCE AND REMOTE SENSING SYMPOSIUM IGARSS, IEEE, 11 July 2021 (2021-07-11), pages 2711-2714, XP033985490, DOI: 10.1109/IGARSS47720.2021.9554384 [retrieved on 2021-09-29] * the whole document * | 1-8 | |

-/--

The present search report has been drawn up for all claims

| Place of search | Date of completion of the search | Examiner |
|---|---|---|
| Munich | 21 November 2024 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 24 18 8197

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MITTERMAYER JOSEF ET AL: "Multistatic Dispersed Swarm Configurations for Synthetic Aperture Radar Imaging", IEEE GEOSCIENCE AND REMOTE SENSING LETTERS, IEEE, USA, vol. 19, 27 April 2022 (2022-04-27), pages 1-5, XP011910813, ISSN: 1545-598X, DOI: 10.1109/LGRS.2022.3171077 [retrieved on 2022-04-28] * the whole document * ----- | 1-8 | |
| A | FREEMAN A. ET AL: "The "Myth" of the minimum SAR antenna area constraint", TRANSACTIONS ON GEOSCIENCE AND REMOTE SENSING, vol. 38, no. 1, 1 January 2000 (2000-01-01), pages 320-324, XP093226238, DOI: 10.1109/IGARSS.1999.772090 * the whole document * ----- | 1-8 | |

**TECHNICAL FIELDS SEARCHED      (IPC)**

The present search report has been drawn up for all claims

| Place of search | Date of completion of the search | Examiner |
|---|---|---|
| Munich | 21 November 2024 | Rudolf, Hans |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

        ......................................................................................

& : member of the same patent family, corresponding
　　document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2018577 B1

**Non-patent literature cited in the description**

- **M. LACHAISE** ; **T. FRITZ** ; **R. BAMLER**. The Dual-Baseline Phase Unwrapping Correction Framework for the TanDEM-X Mission Part 1: Theoretical Description and Algorithms. *IEEE Trans. on Geosci. and Rem. Sens.*, February 2018, vol. 56 (2), 780-798

- **G. KRIEGER** ; **N. GEBERT** ; **A. MOREIRA**. Unambiguous SAR Signal Reconstruction from Nonuniform Displaced Phase Center Sampling. *IEEE Geosci. and Rem. Sens. Lett.*, October 2004, vol. 1 (4), 260-264
- **M. N. PEIXOTO** ; **M. VILLANO** ; **G. KRIEGER** ; **A. MOREIRA** ; **C. WALDSCHMIDT**. *On the Exploitation of CubeSats for Highly Accurate and Robust Single-Pass SAR Interferometry*